# EUROPÄISCHE PATENTANMELDUNG

(11) **EP 2 335 486 A2**
(43) Veröffentlichungstag der Anmeldung: **22.06.2011**
(21) Anmeldenummer: 10015696.7
(22) Anmeldetag: 15.12.2010
(51) Int. Cl.: A22C 11/10, A22C 11/12

(54) **Verschliessvorrichtung zur Bildung von wurstförmigen Verpackungen**

(30) Priorität: 21.12.2009 CH 19672009
(71) Anmelder: Tipper Tie Alpina GmbH, 9201 Gossau (CH)
(72) Erfinder: Pargätzi, Max, 9200 Gossau (CH)
(74) Vertreter: Schalch, Rainer

(57) **Zusammenfassung**

Für die Bildung von wurstförmigen Verpackungen werden Verdrängerscheren (4, 5) zum Raffen eines schlauchförmigen gefüllten Wurstdarms und zum Verdrängen des Füllguts aus einem Zopf verwendet, an welchem Verschlussclips für die Würste gesetzt werden. Damit die Restöffnung der Verdrängerscheren separat eingestellt werden kann, ist bei der Verdrängerschere (5) eine unabhängige Einstellung für deren Restöffnung vorgesehen, wobei diese auf beide Scherenarme wirkt. Damit bleibt auch bei einer separaten Einstellung der Restöffnung der Verdrängerschere das Zentrum der Restöffnung in der Durchlaufrichtung.

## Beschreibung

### Technisches Gebiet

Die Erfindung betrifft eine Verschliessvorrichtung zur Bildung wurstförmiger, gefüllter Verpackungen aus einem Verpackungsstrang, der in einer Durchlaufrichtung durch die Verschliessvorrichtung verläuft, umfassend zwei in Durchlaufrichtung nacheinander folgende Scheren mit einer gemeinsamen Schwenkachse für die Scherenblätter, welche Scheren zum Raffen des Verpackungsstrangs und zum partiellen Verdrängen des Füllgutes ausgestaltet sind, wobei die Scheren in ihrer Offenstellung je eine Durchlassöffnung und in ihrer Schliessstellung je eine Restöffnung für den Verpackungsstrang definieren und die eine Schere als Verdrängerschere gegenüber der anderen Schere in Durchlaufrichtung hin und zurück verschiebbar ist und eine eigene Einstelleinrichtung für ihre Restöffnung umfasst. Ferner betrifft die Erfindung ein Verfahren zur Bildung wurstförmiger Verpackungen gemäss Anspruch 7.

### Stand der Technik

Verschliessvorrichtungen, sogenannte Clipmaschinen, sind bekannt, z.B. aus DE-A-40 13 033 und werden nachfolgend auch an Hand der Figuren 1 bis 4 erläutert. Solche Vorrichtungen weisen ein Paar von Raff- und Verdrängerwerkzeuge auf, welche als Scheren bezeichnet werden, obwohl natürlich kein Schneiden der Verpackungshülle bzw. des Wurstdarms durch diese Werkzeuge erfolgt, sondern eine Verletzung desselben beim Raffen und Verdrängen gerade zu vermeiden ist. Die Scheren schnüren die in offener Scherenposition in Durchlaufrichtung in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die eine Schere als Verdrängerschere zur anderen, feststehenden Schere seitlich, bzw. in Längsrichtung der Verpackung versetzt, wodurch das in der Verpackung enthaltene Produkt aus dem zwischen den Scheren liegenden Bereich verdrängt und somit ein produktfreier Bereich zwischen zwei Würsten geschaffen wird, in den nachfolgend durch die Verschliessvorrichtung die Verschlussclips gesetzt werden. Die Verschliessbewegung und die Öffnungsbewegung der Scheren und die Auf- und Zu-Bewegung von Stempel und Matrize zum Verschliessen der Clips können bekannterweise durch Kurvenscheiben mit Nutkurven und durch Hebel bewirkt werden. Der Versatz in Durchlaufrichtung bzw. die Verdrängerbewegung und die Zurückbewegung der einen Schere erfolgt ebenfalls über eine Kurvenscheibe, einen in deren Steuerkurve eingreifenden Verdrängerhebel und einen zusätzlichen Umlenkhebel, der die Bewegung des Verdrängerhebels in eine Bewegung in Durchlaufrichtung umlenkt. Die Kurven bzw. Kurvenscheiben werden motorisch angetrieben, was die erläuterte Bewegung der Scheren und von Stempel und Matrize ergibt.

Bei diesen Verschliessvorrichtungen sind die Restöffnungen der beiden Verdrängerscheren in der Regel individuell unterschiedlich gross, wobei dies durch unterschiedliche Formgebung bzw. Bearbeitung der Scherenarme bewirkt ist. Die Verstellung der Restöffnung für unterschiedliche Wurstgrössen bzw. Wurstdarmdicken erfolgt mittels einer Verstellung, die beiden Scheren gemeinsam ist. Die Differenz der Restöffnungen bleibt dabei jeweils gleich. Bei einer auf dem Markt befindlichen gattungsgemässen Verschliessvorrichtung der Firma Tipper Tie technopack, Deutschland, ist es zudem bekannt, die Grösse der Restöffnung der Verdrängerschere separat, durch eine auf den einen Scherenarm der Verdrängerschere wirkende, stufenweise Einstellung zu beeinflussen. Durch die somit separat von der anderen Schere einstellbare Restöffnung der Verdrängerschere kann eine bessere Anpassung der Verschliessvorrichtung an verschiedene Produkte bzw. Wurstdarmdicken erfolgen. Diese Einstellung bewirkt indes, dass sich die Lage des Zentrums der Restöffnung mit der Einstellung der Grösse der Restöffnung ändert, was nachteilig für den gerafften Wurstdarm ist.

### Darstellung der Erfindung

Der Erfindung liegt die Aufgabe zu Grunde, eine verbesserte Verschliessvorrichtung zu schaffen.

Dies wird bei der Verschliessvorrichtung der eingangs genannten Art dadurch erreicht, dass die Einstelleinrichtung je ein Einstellmittel für die beiden Scherenblätter der Verdrängerschere aufweist.

Mit der Einstellung beider Scherenblätter kann die Lage des Zentrums der Restöffnung bei der Einstellung der Grösse der Restöffnung konstant gehalten werden.

Bevorzugt sind zusätzlich gemeinsame Verstellmittel für die Scheren vorgesehen, durch welche die Restöffnungen beider Scheren gleichzeitig veränderbar sind, wie dies dem bekannten Vorgehen entspricht. Eine besonders einfache mechanische Lösung für die individuelle Verstellung der Restöffnung der verschiebbaren Verdrängerschere ergibt sich, wenn die betätigungsseitigen Scherenarme der Verdrängerschere von einem ersten und einem zweiten Führungsbolzen betägigbar sind auf denen die Scherenarme längsverschieblich gelagert sind und wenn die Einstellmittel durch stufenlos einstellbare Exzenterlager mit jeweils einer Einstellskala gebildet sind. Es ist dabei bei der Einstellung erforderlich, dass jeder Exzenter der Scherenarme der verschiebbaren Verdrängerschere separat verstellt wird, um die Form der Restöffnung nicht durch eine einseitige Verstellung zu stören, doch wiegt die einfache konstruktive Lösung diesen Nachteil auf. Die gleichmässige Verstellung wird durch die Skalen für die Verstellung bei beiden Exzenterlagern sichergestellt. Bevorzugt ist es weiter, dass jedes Exzenterlager ein scherenarmendseitiges Lagergehäuse aufweist, in welchem ein verschiebbarer Lagerkörper angeordnet ist, der eine Bohrung aufweist, in welcher Bohrung eine Hülse mit einer exzentrischen Bohrung drehbar angeordnet ist, welche Hülse den Führungsbolzen aufnimmt und an mindestens einem Ende mit einem Betätigungsmittel und der Skala versehen ist.

Die Aufgabe wird ferner durch das Verfahren nach Anspruch 7 gelöst, wobei sich dieselben Vorteile einstellen, die bei der Vorrichtung genannt worden sind.

### Kurze Darstellung der Zeichnungen

Im Folgenden werden eine Vorrichtung und das Vorgehen nach Stand der Technik und werden Ausführungsbeispiele der Erfindung anhand der Zeichnungen näher erläutert. Dabei zeigt
Figur 1 eine schematische Seitenansicht einer bekannten Vorrichtung zur Herstellung von wurstförmigen Verpackungen;
Figur 2 bis Figur 4 schematisch Schritte bei der Herstellung der wurstförmigen Verpackungen, worin die wurstförmige Verpackung seitlich in Durchlaufrichtung durch die Verschliessvorrichtung ersichtlich ist;
Figur 5 einen Teil der Vorrichtung mit dem Scherenpaar gemäss einer Ausführungsform der Erfindung in schaubildlicher Darstellung;
Figur 6 eine Frontalansicht auf die Verdrängerscheren bei der Ausführung von Figur 5;
Figur 7 die Restöffnung der Verdrängerschere bei Neutralstellung beider Einstellmittel; und
Figur 8 die Restöffnung der Verdrängerschere bei der maximalen Verstellung beider Einstellmittel.

### Wege zur Ausführung der Erfindung

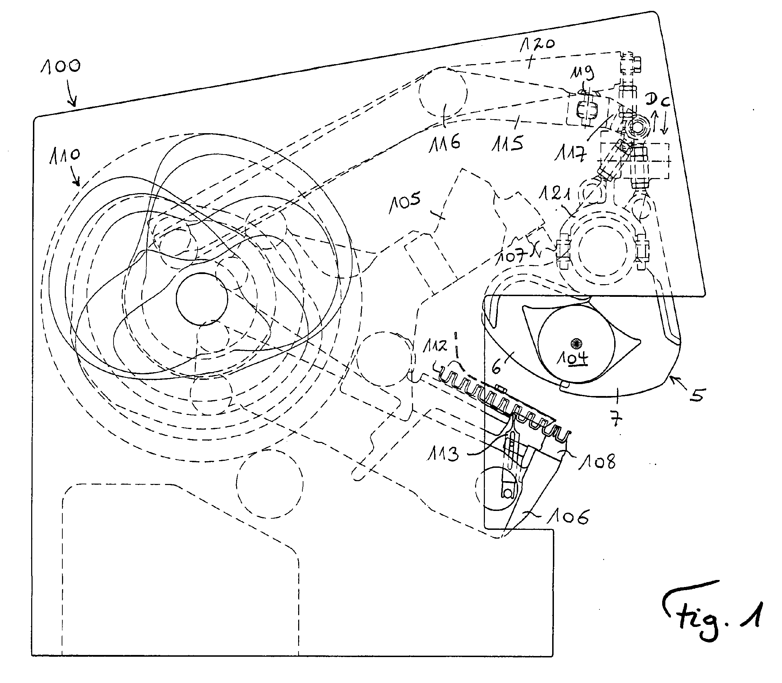

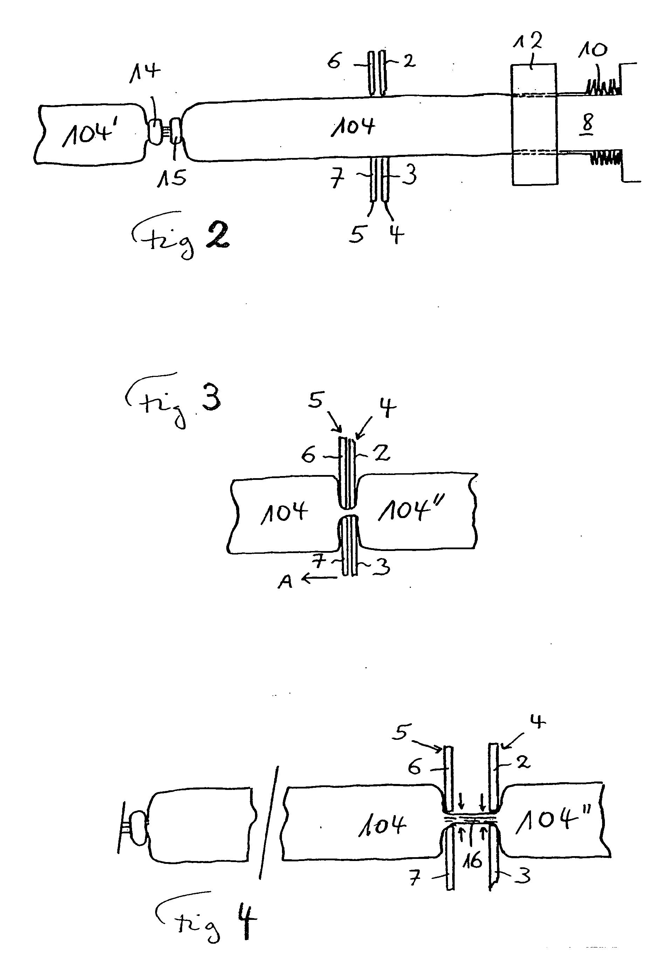

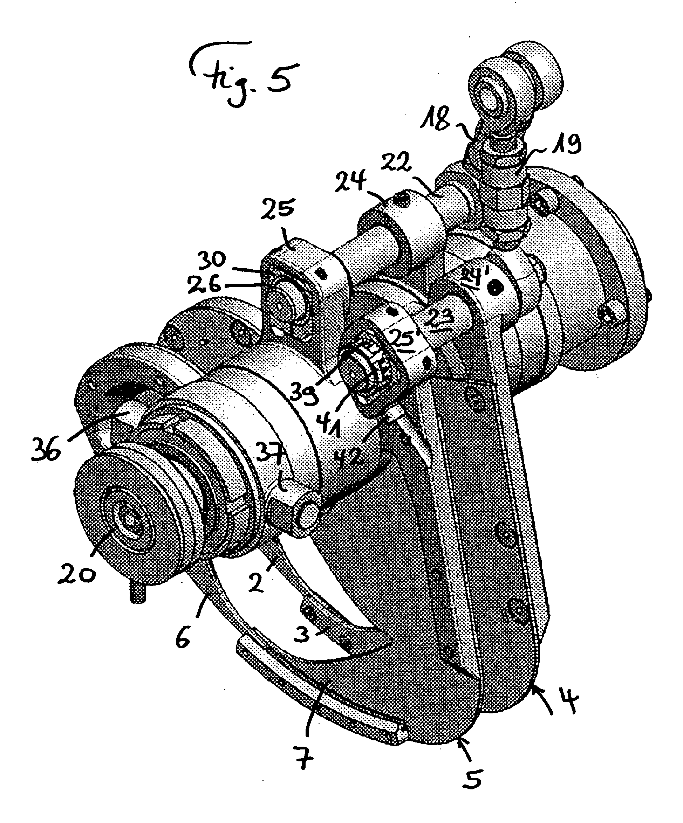

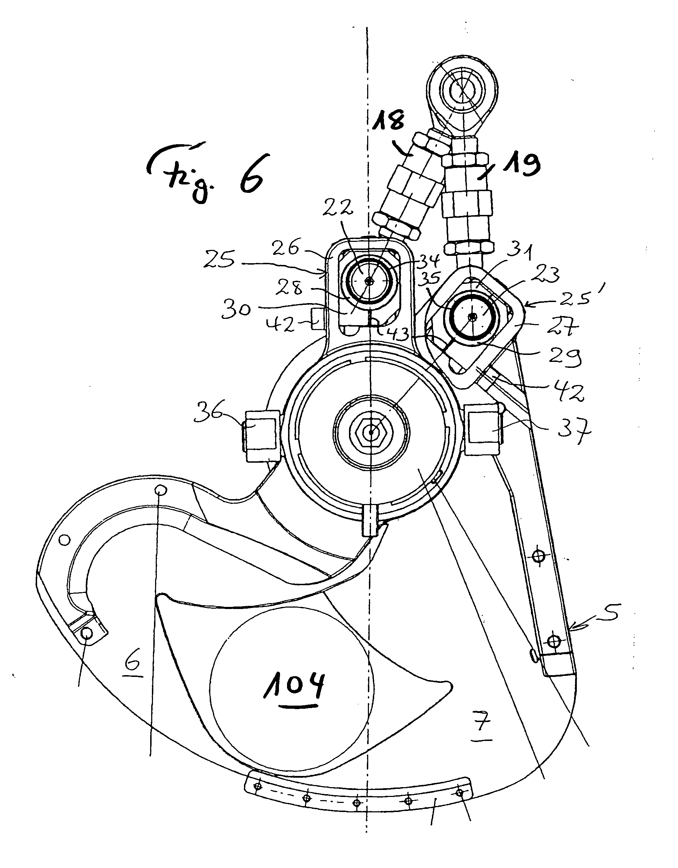

Anhand der Figuren 1 bis 4 wird der Stand der Technik erläutert und die Figuren 5 bis 8 zeigen eine bevorzugte erfindungsgemässe Ausführung. Figur 1 zeigt schematisch eine Verschliesseinrichtung 100 nach Stand der Technik für wurstförmige Verpackungen 104. Bekannterweise ist eine solche Verschliesseinrichtung mit einem Scherenpaar versehen, von welchem in der Figur 1 nur die eine Schere 5 (Verdrängerschere) mit den verpackungsseitigen Scherenarmen 6, 7 ersichtlich ist, während in den weiteren Figuren auch die andere Schere 4 mit den verpackungsseitigen Scherenarmen 2 und 3 teilweise ersichtlich ist. Das Scherenpaar 4, 5 ist in einer ersten Stellung mit nahe benachbart nebeneinander liegenden Scheren angeordnet, welche in Offenstellung die wurstförmige Verpackung 104 in sich aufnehmen, wie in Figur 1 ersichtlich und in Figur 2 schematisch dargestellt. Figur 2 zeigt dabei auch schematisch, wie der auf dem Füllrohr 8 einer Wurstfüllmaschine aufgezogene, gefaltete Darm 10 mit dem Produkt (Wurstbrät) gefüllt wird. Der Darm wird dabei durch eine Darmbremse 12 gebremst. Es entsteht eine schlauchförmige Wurst, die in Portionen bzw. einzelne Würste getrennt werden muss und dabei geradlinig durch die Verschliessvorrichtung hindurchläuft.
Figur 2 zeigt entsprechend, wie durch einen vorherigen Einschnürungs- und Schliessvorgang, wie er noch beschrieben wird, bereits die in Figur 2 ersichtlichen Verschlüsse 14, 15 (Clips) als Endclip der nur teilweise dargestellten vorherigen Wurst 104' und als Anfangsclip der nun in Füllung befindlichen Wurst 104 gesetzt worden sind. Hat die als kontinuierlicher Strang aus der Wurstfüllmaschine austretende Packung eine vorbestimmte Länge bzw. ein vorbestimmtes Gewicht erreicht, so werden die Scheren 4, 5 geschlossen, wodurch sich das Einschnüren der schlauchförmigen Packung ergibt, welches als Raffen bezeichnet wird. Die beiden Scheren liegen dabei mit geringem Abstand nebeneinander, wie in Figur 3 dargestellt. Es verbleibt nach dem Schliessen der Scheren bei beiden Scheren 4, 5 eine kleine Restöffnung für den zusammengerafftem Darm. Die Schere 5 soll dabei die pralle, nun fertig gefüllte Wurst 104 möglichst gut abdichten und somit den Darm eng zusammenraffen bzw. eine möglichst kleine Restöffnung der Schere aufweisen. Danach wird diese Schere 5 (bzw. die weiter vom Füllrohr weg liegende Schere) in Längsrichtung der schlauchförmigen Verpackung bzw. in Durchlassrichtung verschoben, was mit dem Pfeil A dargestellt ist, wodurch das in der Verpackung enthaltene Produkt in dem zwischen den beiden Scheren liegenden Bereich verdrängt wird, so dass dort eine produktfreie Zone (der Zopf 16) gebildet wird, wie in Figur 4 schematisch gezeigt. Dabei wird durch die Restöffnung der anderen Schere 4, die stationär bleibt, Darm von der angefangenen, noch nicht fertig gefüllten Wurst 104" nachgezogen. Dazu muss die Restöffnung der Schere 4 gross genug sein, um sicher eine Beschädigung des Darms beim Nachziehen zu vermeiden. In dem so gebildeten ,,Zopf" 16 werden nun auf bekannte Weise Verschlussclips gesetzt, was in Figur 4 nur durch die auf den Zopf 16 gerichteten Pfeile angedeutet ist, wozu aber in der Figur 1 einer der beiden Clipdrähte 112 gezeigt ist, der durch einen Vorschubhebel 113 in eine Matrize 108 gefördert wird. Die am Unterarm 106 der Vorrichtung 100 angeordnete Matrize und der am Oberarm 105 angeordnete Stempel 107 schneiden bei der Verschliessbewegung jeweils einen Clip vom Clipdraht 112 ab und verschliessen diesen. Auf diese Weise werden im produktfreien Bereich bzw. im Zopf mit den beiden Clipdrähten in der Regel zwei Clips gesetzt, nämlich der Endclip der einen Wurst und der Anfangsclip für die nachfolgende Wurst, wie in Figur 2 bzw. 4 gezeigt. Bekannt ist es, die geschilderten Bewegungen der Scheren und von Unterarm und Oberarm der Vorrichtung mittels Kurvenscheiben zu bewirken, die in der Figur 1 lediglich generell mit 110 angedeutet sind. Diese Kurvenscheiben werden z.B. mittels eines Motors angetrieben. Die Kurvenscheiben für Ober- und Unterarm weisen in ihren Flanken Nuten auf, deren Seitenwandflächen die Steuerkurven für entsprechende Kurvenhebel bilden, die in die Nuten eingreifen. Dies wird hier nicht weiter erläutert, ist aber bekannt. Auch die Raffbewegung der Scheren wird durch eine entsprechende Nutkurve in der Flanke einer Kurvenscheibe gesteuert, was in der Figur dadurch angedeutet ist, dass der Kurvenhebel 115, welcher um die Schwenkachse 116 schwenkbar ist z.B. mit einer Rolle in eine Nutkurve der zugehörigen Kurvenscheibe eingreift. Dies bewirkt über den Hebel 115 und den daran anschliessenden Hebel 117 ein Schliessen bzw. Öffnen der Scheren 4 und 5 bzw. den Raffvorgang. Die Scheren sind Gelenkscheren, deren Scherenblätter auf einer gemeinsamen Achse gelagert sind. Die betätigungsseitigen bzw. zu den Hebeln 115, 117 weisenden Scherenarme sind mittels Distanzgliedern 18 und 19 mit dem freien Ende des Hebels 115 verbunden. Die Restöffnungen der beiden Scheren 4 und 5 können für diese gemeinsam mit einer Stellschraube 119 im Verbindungsglied der beiden Hebel 115 und 117 eingestellt werden, um die Restöffnungen an verschiedene Wurstgrössen bzw. Darmdicken anzupassen. Dies erfolgt mittels der Stellschraube 119 immer für beide Scheren gemeinsam, da die Stellschraube die Lage des Hebels 117 ändert. Zwar sind die Scheren gemäss Stand der Technik in der Regel unterschiedlich geformt bzw. bearbeitet, so dass sich die Restöffnung der verschiebbaren Verdrängerschere 5 im geschlossenen Zustand von der Restöffnung der stationären, füllrohrseitigen Schere 4 im geschlossenen Zustand unterscheidet (wobei die Restöffnung der Schere 5 kleiner ist). Diese Differenz der Restöffnungen bleibt aber dieselbe, wenn mittels des Stellhebels und der Stellschraube die Restöffnung gemeinsam für beide Scheren verstellt wird, um diese an dickeres oder dünneres Darmmaterial anzupassen.

Die Figuren 5 bis 8 zeigen eine erfindungsgemässe Ausführungsform. Gleiche Bezugsziffern wie bisher verwendet bezeichnen dabei gleiche Bauelemente. Es sind die beiden Scheren 4 (stationäre, füllrohrseitige Schere) und 5 (entlang einer Achse 20 hin- und her verschiebbare Schere) ersichtlich. Die Achse 20 bildet die Gelenkachse für die beiden Gelenkscheren 4 und 5. Für die Raffbewegung bzw. die Schliessbewegung und die Öffnungsbewegung sind die beiden Distanzglieder 18 und 19 mit dem in den Figuren 5 bis 8 nicht gezeigten Hebel 117 von Figur 1 verbunden. Damit wird ein Auseinanderspreizen der beiden Führungsbolzen 22 und 23 bewirkt, wenn der Hebel 117 von Figur 1 sich dort in Richtung des Pfeils C bewegt. Umgekehrt wird eine gegenseitige Annäherung der Führungsbolzen 22 und 23 bewirkt, wenn sich der Hebel 115 von Figur 1 in Richtung des Pfeils D bewegt und somit in Gegenrichtung zur Pfeilrichtung C. Mit der entsprechenden Bewegung der betätigungsseitigen Scherenarme 24, 24' der Schere 4 und der betätigungsseitigen Scherenarme 25, 25' der Schere 5 wird bei den entsprechenden auf die Verpackung einwirkenden Scherenarmen 2, 3 bzw. 6, 7 die entsprechende gegenläufige Gelenkscherenbewegung bewirkt. Die betätigungsseitigen Scherenarme 25, 25' sind verschiebbar auf den Führungsbolzen 22 und 23 gelagert. Die Verdrängerschere 5 ist über den Verdrängerhebel 120 und den Umlenkhebel 121 von Figur 1, welcher an den Zapfen 36 und 37 der Schere 5 angreift, entlang der Achse 20 verschiebbar, um die geschilderte Verdrängerbewegung auszuführen.
Bei diesem bevorzugten Ausführungsbeispiel ist die Einstellbarkeit der Restöffnung der Schere 5 separat von der Schere 4 derart gelöst, dass die Lagerung der betätigungsseitigen Scherenarme 25 und 25' auf dem Führungsbolzen 22 bzw. dem Führungsbolzen 23 jeweils eine separat mittels eines Exzenters stufenlos einstellbare Lagerung ist. In den länglichen Lageraufnahmen 26 und 27 ist jeweils ein Lagerkörper 30 bzw. 31 angeordnet, welcher eine runde Bohrung aufweist. In jede dieser runden Bohrungen ist jeweils eine Hülse 28 bzw. 29 drehbar eingesetzt. Die Hülsen 28 und 29 weisen jeweils eine exzentrische Bohrung auf, in welcher die Führungsbolzen 22 bzw. 23, insbesondere mit einer zusätzlichen Gleitlagerhülse 34 bzw. 35, aufgenommen sind. Durch das Verdrehen der Hülsen 28 und 29 mit der exzentrischen Bohrung wird somit der jeweilige betätigungsseitige Scherenarm 25 bzw. 25' gegenüber dem jeweiligen Führungsbolzen 22 bzw. 23 verschoben, so dass sich eine Änderung der Aufspreizung der betätigungsseitigen Scherenarme ergibt. Dies bewirkt bei den verpackungsseitigen Scherenarmen eine entsprechende Veränderung der Restöffnung. Wenn beide betätigungsseitigen Scherenarme um den gleichen Betrag verschoben werden bzw. die Hülsen 28 und 29 um den gleichen Betrag verdreht werden, bleibt das Zentrum der Restöffnung dabei an Ort und nur die Grösse der Restöffnung wird verändert. Damit eine Drehung der Hülsen um den gleichen Betrag durch die Bedienungsperson möglich ist, sind bei dieser Ausführungsform die Hülsen 28, 29 mit einer Skala 39 versehen, so dass die Verdrehung der Hülsen gegenüber einer festen Markierung 38 an der jeweiligen Lageraufnahme durch die Bedienungsperson festgestellt werden kann. Es könnte auch eine mechanische Kopplung der Hülsen, z.B. über einen Zahnriemen, vorgesehen sein, so dass die Drehung nur einer der Hülsen die Drehung auch der anderen Hülse bewirkt.

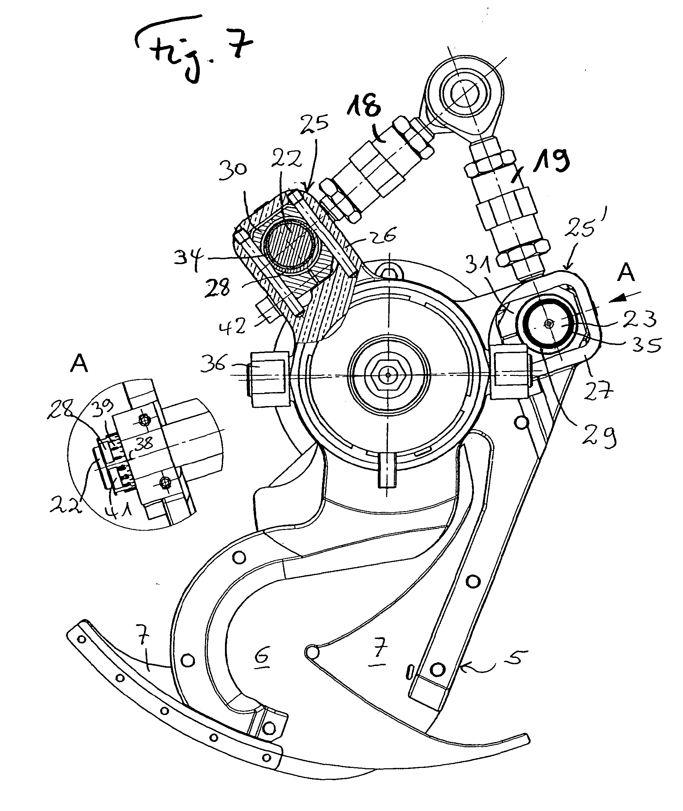

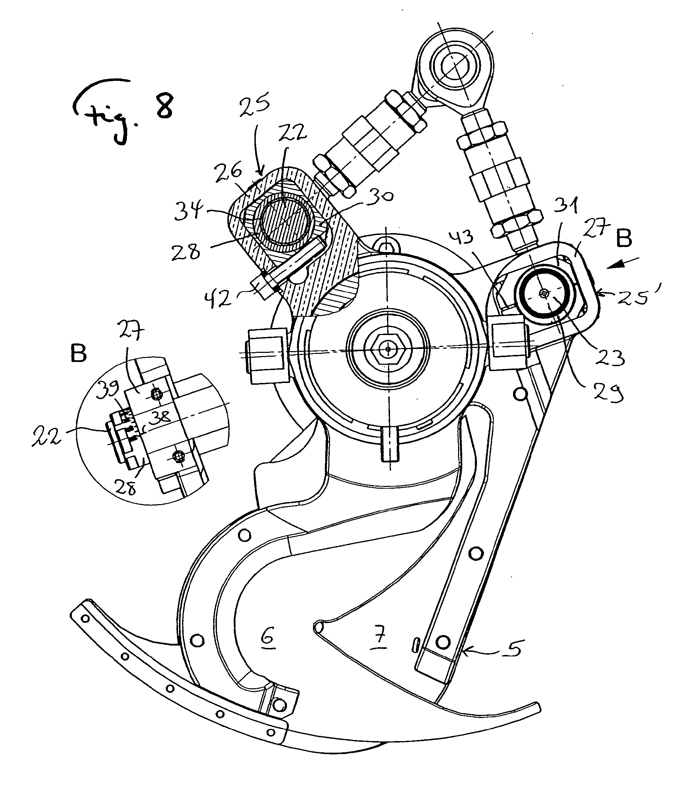

Die Figuren 7 und 8 zeigen die beiden Hülsen in verschiedener Verdrehstellung. In Figur 7 ist ersichtlich, dass die Hülsen 28, 29 je in eine Stellung verdreht worden sind, in welcher jeweils die Exzentrizität der Hülse in einer Richtung radial zur Achse 20 ausgerichtet, so dass die Führungsbolzen 22, 23 in Richtung der Längsachse der Distanzglieder 18, 19 gesehen auf beiden Seiten im gleichen Abstand zur Innenseite der Bohrung im Lagerkörper 30, 31 liegen. Damit ergibt sich die Neutralstellung, in welcher die Restöffnung für die Schere 5 mittels deren individuellen Einstellung nicht beeinflusst ist. Die Grösse der Restöffnung ist für beide Scheren dabei zusammen von der Einstellung der Stellschraube 119 zur gemeinsamen Restöffnungseinstellung der beiden Scheren 4, 5 abhängig. Die individuelle Einstellung mittels der Hülsen 28 und 29 aus dieser Neutralstellung heraus erfolgt dabei, wie in Detail A der Figur 7 ersichtlich über die Skala 39 mit Bezug auf die feststehende Markierung 38.

In Figur 8 ist die Lage gezeigt, bei welcher durch Verdrehung der Hülsen 28, 29 die minimale Restöffnung der Schere 5 eingestellt worden ist. Die Verdrehung kann durch eine Ausgestaltung des freien Hülsenendes als Betätigungsmittel 41, z.B. als Mehrkant zum Ansetzen eines Werkzeuges, erleichtert werden. Es ist in der Figur 8 ersichtlich, dass die Exzentrizität der Hülsen nun in Richtung der Längsachsen der Distanzglieder 18, 19 liegt, wobei der in der Schnittansicht schmale Bereich der Hülsenwand gegenüber dem jeweiligen Distanzglied liegt und der breite Bereich der Hülsenwand auf der gegenüberliegenden Seite des jeweiligen Führungsbolzens 22, 23 liegt. Damit sind die betätigungsseitigen Scherenarme der Schere 5 maximal aufgespreizt und somit die verpackungsseitigen Scherenarme maximal verschränkt, was zur minimalen Restöffnung führt. Im Detail B von Figur 8 ist ersichtlich, dass die Skala 39 nun anders zur feststehenden Markierung 38 liegt.

Damit die exzentrische Hülse gedreht werden kann, müssen sich die Lagerkörper 30 bzw. 31 in den Lageraufnahmen 26, 27 radial zu Achse 20 verschieben können. In Figur 7 ist ersichtlich, dass die Lagerkörper an ihrem äusseren Ende in radialer Richtung zur Achse 20 gesehen einen Abstand zum oberen Ende der jeweiligen Lageraufnahme aufweisen. In Figur 8 ist ersichtlich, wie dieser Abstand durch die Verdrehung der Hülsen aufgehoben worden ist.
Der an den beiden frei drehbaren Hülsen jeweils identisch gewählte Einstellwert für die Drehung der Hülse bzw. die Restöffnung der Schere 5 wird bei jeder Hülse mittels eines Befestigungsmittels fixiert, welches nach der Einstellung eine weitere Drehung im Betrieb verhindert, bis es wieder gelöst wird, um eine Drehung bzw. Einstellung zu erlauben. In der bevorzugten Ausführung ist das Befestigungsmittel jeweils ein Gewindebolzen 42 in Kombination mit einem Schlitz 43 im Lagerkörper, was ein Festklemmen der jeweiligen Hülse im Lagerkörper erlaubt.

Für die Bildung von wurstförmigen Verpackungen werden somit Scheren zum Raffen eines schlauchförmigen gefüllten Wurstdarms und zum Verdrängen des Füllguts aus einem Zopf verwendet, an welchem Verschlussclips für die Würste gesetzt werden. Damit die Restöffnung der Verdrängerscheren separat eingestellt werden kann, ist bei der Verdrängerschere eine beidseitige bzw. auf beide Scherenarme der Schere unabhängig wirkende Einstellung für deren Restöffnung vorgesehen. Bevorzugt erfolgt dies über exzentrische Verstellmittel an den Lagern mit denen die Betätigungsenden der Scherenblätter der Verdrängerschere an Führungsbolzen 22, 23 für das Öffnen und Schliessen der Scheren gelagert sind.

## Patentansprüche

1. Verschliessvorrichtung (100) zur Bildung wurstförmiger, gefüllter einzelner Verpackungseinheiten (104, 104', 104") aus einem gefüllten Verpackungsstrang, der in einer geradlinigen Durchlaufrichtung durch die Verschliessvorrichtung läuft, umfassend zwei in Durchlaufrichtung nacheinander folgende Scheren (4, 5) mit einer gemeinsamen Schwenkachse (20) für die Scherenblätter (2, 3; 6, 7), welche Scheren zum Raffen des Verpackungsstrangs und zum partiellen Verdrängen des Füllgutes ausgestaltet sind, wobei die Scheren in ihrer Offenstellung je eine Durchlassöffnung und in ihrer Schliessstellung je eine Restöffnung für den Verpackungsstrang definieren und die eine Schere (5) als Verdrängerschere gegenüber der anderen Schere in Durchlaufrichtung hin und zurück verschiebbar ist und eine eigene Einstelleinrichtung (26 - 31) für ihre Restöffnung umfasst, **dadurch gekennzeichnet, dass** die Einstelleinrichtung je ein Einstellmittel für die beiden Scherenblätter der Verdrängerschere aufweist.

2. Verschliessvorrichtung nach Anspruch 1, **dadurch gekennzeichnet, dass** die Scheren (4, 5) gemeinsame Verstellmittel (119) aufweisen, durch welche die Restöffnungen beider Scheren gleichzeitig veränderbar sind.

3. Verschliessvorrichtung nach Anspruch 1 oder 2, **dadurch gekennzeichnet, dass** die betätigungsseitigen Scherenarme (25, 25') der Verdrängerschere (5) von einem ersten und einem zweiten Führungsbolzen (22, 23) betätigbar sind, dass die Scherenarme auf den Führungsbolzen längsverschieblich gelagert sind und dass die Einstellmittel durch stufenlos einstellbare Exzenterlager (28, 29, 30, 31) mit jeweils einer Einstellskala (39) gebildet sind.

4. Verschliessvorrichtung nach Anspruch 3, **dadurch gekennzeichnet, dass** jedes Exzenterlager ein scherenarmendseitiges Lagergehäuse (26; 27) aufweist, in welchem ein verschiebbarer Lagerkörper (30; 31) angeordnet ist, der eine Bohrung aufweist, in welcher Bohrung eine Hülse (28; 29) mit einer exzentrischen Bohrung drehbar angeordnet ist, welche Hülse den Führungsbolzen aufnimmt und an mindestens einem Ende mit einem Betätigungsmittel (41) und der Skala versehen ist.

5. Verschliessvorrichtung nach Anspruch 4, **dadurch gekennzeichnet, dass** ein lösbares Befestigungsmittel (41, 43) für die Hülse vorgesehen ist, durch welches die Drehbarkeit der Hülse aufgehoben werden kann.

6. Verschliessvorrichtung nach Anspruch 5, **dadurch gekennzeichnet, dass** das Befestigungsmittel durch einen Gewindebolzen (41) und durch einen Schlitz (43) im Lagerkörper gebildet ist, wodurch die Hülse mittels des Gewindebolzens im Lagerkörper festklemmbar ist.

7. Verfahren zur Bildung wurstförmiger, gefüllter Verpackungen aus einem Verpackungsstrang, der in einer Durchlaufrichtung durch eine Verschliessvorrichtung verläuft, in welcher ein Scherenpaar (4, 5) das Raffen des Verpackungsstrangs und das partielle Verdrängen des Füllgutes bewirkt, wobei die Scheren des Scherenpaars in ihrer Offenstellung je eine Durchlassöffnung bilden und in ihrer Schliessstellung je eine Restöffnung bilden und die eine Schere als Verdrängerschere gegenüber der anderen Schere in Durchlaufrichtung hin und zurück verschoben wird, wobei die Verdrängerschere eine eigene Einstelleinrichtung für deren Restöffnung aufweist, und dass diese Restöffnung separat für die Verdrängerschere ohne Beeinflussung der Restöffnung der anderen Schere eingestellt wird, **dadurch gekennzeichnet, dass** die separate Einstellung der Restöffnung bei der Verdrängerschere für jeden betätigungsseitigen Scherenarm separat und mittels einer Skala um den gleichen Betrag erfolgt.

8. Verfahren nach Anspruch 7, **dadurch gekennzeichnet, dass** die Scheren zusätzlich gemeinsame Verstellmittel aufweisen, durch welche die Restöffnungen beider Scheren gleichzeitig veränderbar sind.
